# EUROPEAN PATENT SPECIFICATION

(11) **EP 0 739 231 B1**
(45) Date of publication and mention of the grant of the patent: **03.12.1997**
(21) Application number: 95905239.0
(22) Date of filing: 13.01.1995
(51) Int. Cl.: B01D 29/39

(54) **FILTER ELEMENT**
FILTERELEMENT
ELEMENT DE FILTRE

(30) Priority: 14.01.1994 NL 9400065
(43) Date of publication of application: 30.10.1996
(73) Proprietor: AMAFILTER BV, NL-1823 CL Alkmaar (NL)
(72) Inventor: PLAISIER, Leendert, NL-1823 CL Alkmaar (NL)
(74) Representative: Koomen, M.J.I.
(86) International application number: NL9500017
(87) International publication number: WO9519214

(56) References cited:
- WO-A-94/14518
- FR-A- 359 886
- FR-A- 2 189 096
- GB-A- 658 610
- GB-A- 1 249 249
- US-A- 2 568 085
- US-A- 4 369 109

## Description

The invention relates to a leaf filter element, which filter element is intended to be installed standing or hanging within a filter vessel, which filter element is formed by a supporting- or mounting frame, within which a flat leaf shaped filtration part, such as supporting wire netting covered on both sides by filter gauze, is mounted, which filter element further is provided with means for the discharge of the filtrate to a manifold and with further means for hanging or supporting the element in the filter vessel, while the element is provided with at least two supporting elements, extending vertically between two or more parts of the supporting- or mounting frame, which supporting elements divide the filtration part into at least three sectors having substantially the same size.

US-A-2 568 085 describes a leaf filter element which is provided with a number of supporting elements extending between two or more parts of the supporting or mounting frame, which supporting elements divide the element into at least three sections, and by means of which supporting elements greater rigidity is given to the frame.

It is known to provide leaf filter elements with means for connecting the element to a vibrator mounted within a filter vessel, for discharging the filter cake formed on the filter element.

From GB-A-658 610 is known a filter apparatus comprising a plurality of individual filter elements which are supported in the apparatus in such a way that they can be oscillated in the filter apparatus casing as a unit in order to effect the discharge of the filter cake formed on the filter elements.

With the known filter element the forces which are generated, via the single joint between the filter element and a vibrator, by the vibrator onto the filter medium, do not move over the filter medium in a uniform manner, so that it is possible that the forces applied at a certain location to the filter medium are insufficient to loosen the filter cake, while at another location the forces applied to the filter medium are stronger than is necessary for the filter cake to loosen, whereby it is further possible that the filter medium locally is strained more than is admissable.

It is the object of the present invention to obviate this drawback of the known filter element.

The filter element according to the invention is characterized in that the means for connecting the element to a vibrator mounted within the filter vessel are formed by at least two connecting elements, provided onto a frame part at a distance from one another, for the connection of the element to a vibrator.

By using more than one supporting element as described above and by the further application of two connecting elements for the connection of the filter element to the vibrator it is achieved that the vibrations which are transferred by the vibrator to the element are distributed over the filter medium in a more uniform manner, so that a complete loosening of the filter cake may be achieved in a manner which involves less straining of the filter medium.

In a favourable way the connecting elements for the connection of the element to a vibrator are mounted to a frame part at the place of the connections between the supporting elements and the frame part.

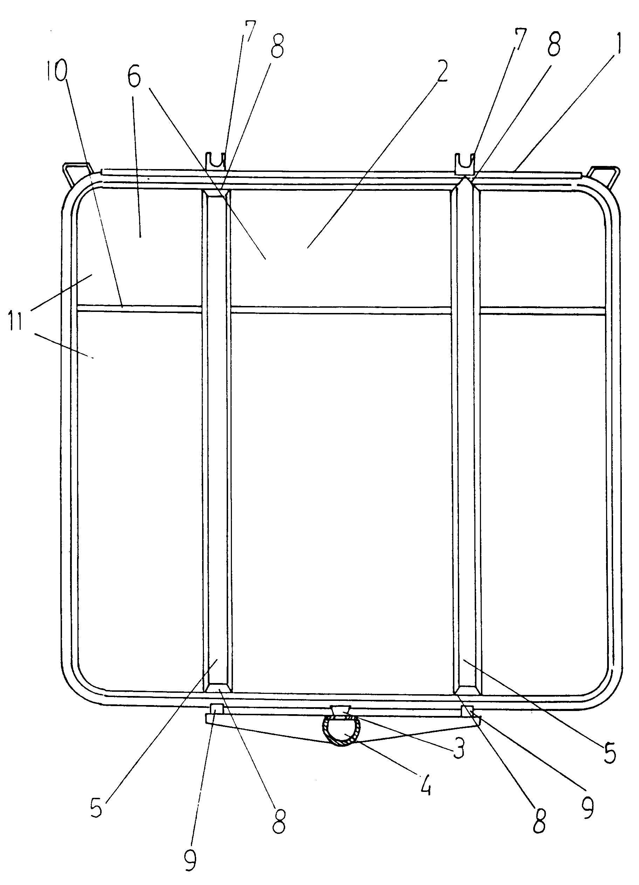

An embodiment of the element according to the invention will now be described further with reference to the drawing of an example of an embodiment.

In the drawing is shown a front view of the filter element according to the invention.

As can be seen in the drawing, the filter element is formed by a supporting- or mounting frame 1, within which a flat leaf shaped filtration part 2, such as supporting wire netting, covered on both sides by filter gauze, is mounted. The filter element is provided with means 3 for the discharge of the filtrate to a manifold 4. The element is provided with at least two supporting elements 5, each extending between opposed frame parts 1, which divide the element, more in particular the filtration part 2, in at least three sectors 6.
As can be seen in the drawing, the sectors have substantially the same size. Onto a frame part 1 two connecting elements 7 are mounted at a distance from one another for the connection of the element to a vibrator. The connecting elements 7 are mounted at the location of the connections 8 between the supporting elements 5 and the frame part 1.
The example of the embodiment shown in the drawing further is provided with two supports 9, mounted to a frame part 1 at a distance from one another, which are provided to the frame part 1 at the location of the connections 8 between the supporting elements 5 and the frame part 1.
Substantially transverse in relation to the supporting elements 5 a support strip 10 is provided over the filtration part 2, which divides the filtration part 2 in the element in two sectors 11. These sectors may be divided in the ratio 1:2.

## Claims

1. Leaf filter element, which filter element is intended to be installed standing or hanging within a filter vessel, which filter element is formed by a supporting- or mounting frame (1), within which a flat leaf shaped filtration part (2), such as supporting wire netting covered on both sides by filter gauze, is mounted, which filter element further is provided with means (3) for the discharge of the filtrate to a manifold (4) and with further means for hanging or supporting the element in the filter vessel, while the element is provided with at least two supporting elements (5), extending vertically between two or more parts of the supporting- or mounting frame (1), which supporting elements (5) divide the filtration part (2) into at least three sectors (6) having substantially the same size, while the filter element is provided with means for connecting the element to a vibrator mounted within the filter vessel, by means of which the filter cake formed on the filter element can be discharged, characterized in that the means are formed by at least two connecting elements (7), provided onto a frame part (1) at a distance from one another, for the connection of the element to a vibrator.

2. Filter element according to claim 1, characterized in that the connecting elements (7) for the connection of the element to a vibrator are mounted to a frame part (1) at the location of the connections (8) of the supporting elements (5) to the frame part (1).

3. Filter element according to one of the preceding claims, characterized in that the means for supporting the filter elements in the filter vessel are formed by at least two supports (9), which are provided onto a frame part (1) at a distance from one another.

4. Filter element according to claim 3, characterized in that the supports (9) are provided onto a frame part (1) at the locations of the connections (8) of the supporting elements (5) to the frame part (1).

5. Filter element according to one of the preceding claims, characterized in that the element is provided with at least one support strip (10), mounted over the filtration part (2), and extending substantially transverse in relation to the supporting elements (5), which divides the filtration part (2) in the element into at least two sectors (11).

6. Filter element according to claim 5, characterized in that the size ratio of the sectors (11) divided by the support strip (10) is 1:2.

## Patentansprüche

1. Blattfilterelement, das stehend oder hängend innerhalb eines Filterbehälters einbaubar und durch einen Stütz- und Einbaurahmen (1) gebildet ist, in dem ein flaches blattförmiges Filtrierteil (2), z. B. ein stützendes Drahtnetz, das an beiden Seiten mit Filtergewebe bedeckt ist, angebracht ist, wobei das Filterelement mit Mitteln (3) für das Ablaufen des Filtrats zu einem Sammelrohr (4) und mit weiteren Mitteln zum Aufhängen oder Stützen des Elementes im Filterbehälter und mit wenigstens zwei Stützelementen (5) versehen ist, die sich vertikal zwischen zwei oder mehr Teilen des Stütz- und Einbaurahmens (1) erstrecken und das Filtrierteil (2) in wenigstens drei Sektoren (6) von im wesentlichen gleicher Größe unterteilen, und das Filterelement mit Mitteln zum Verbinden des Elementes mit einem Vibrator versehen ist, der innerhalb des Filterbehälters angebracht ist und durch den der auf dem Filterelement entstandene Filterkuchen ausgetragen werden kann, **dadurch gekennzeichnet**, daß die Mittel durch wenigstens zwei Verbindungselemente (7) gebildet werden, die auf einem Rahmenteil (1) in einem Abstand voneinander zum Verbinden des Elementes mit einem Vibrator vorgesehen sind.

2. Filterelement nach Anspruch 1, **dadurch gekennzeichnet**, daß die Verbindungselemente (7) für die Verbindung des Elementes mit einem Vibrator an einem Rahmenteil (1) an den Verbindungsstellen (8) von Stützelementen (5) mit dem Rahmenteil (1) angebracht sind.

3. Filterelement nach einem der vorgehenden Ansprüche, **dadurch gekennzeichnet**, daß die Mittel zum Stützen der Filterelemente im Filterbehälter durch wenigstens zwei Stützen (9) gebildet sind, die an einem Rahmenteil (1) in einem Abstand voneinander angeordnet sind.

4. Filterelement nach Anspruch 3, **dadurch gekennzeichnet**, daß die Stützen (9) an einem Rahmenteil (1) an den Verbindungsstellen (8) der Stützelemente (5) mit dem Rahmenteil (1) angebracht sind.

5. Filterelement nach einem der vorhergehenden Ansprüche, **dadurch gekennzeichnet**, daß das Element mit wenigstens einer auf dem Filtrierteil (2) angebrachten Stützstrebe (10) versehen ist, die sich im wesentlichen querverlaufend in bezug auf die Stützelemente (5) erstreckt und das im Element befindliche Filtrierteil (2) in wenigstens zwei Sektoren (11) unterteilt.

6. Filterelement nach Anspruch 5, **dadurch gekennzeichnet**, daß das Größenverhältnis der durch die Stützstrebe (10) unterteilten Sektoren (11) 1:2 beträgt.

## Revendications

1. Elément de filtre en feuille, cet élément étant prévu pour être installé en position debout ou suspendue dans une enceinte de filtrage, et cet élément comportant un cadre (1) servant de monture ou support dans lequel est monté un organe de filtrage (2) en forme de feuille plate, constitué par exemple par un treillis support en fils métalliques recouvert sur ces deux faces par un tissu filtrant, cet élément de filtre comportant en outre des moyens pour envoyer le filtrat dans un collecteur d'évacuation (4), et aussi des moyens de suspension ou de fixation pour monter l'élément de filtre dans le corps du filtre, l'élément étant pourvu à cet effet d'au moins deux montants (5) qui s'étendent verticalement entre au moins deux parties du cadre (1) qui sert de monture, ces montants (5) divisant l'étendue de l'organe de filtrage (2) en au moins trois secteurs (6) ayant sensiblement la même importance, et l'élément de filtre comportant en outre des moyens de liaison pour relier cet élément à un vibreur monté dans le corps du filtre afin d'enlever et d'évacuer le gâteau de filtrage formé sur l'élément de filtre, caractérisé en ce que ces moyens de liaison sont constitués par au moins deux organes de fixation (7) prévus sur une partie du cadre (1) à une certaine distance l'un de l'autre, pour relier l'élément de filtre à un vibreur.

2. Elément de filtre selon la revendication 1, caractérisé en ce que les organes de fixation (7) prévus pou relier l'élément de filtre à un vibreur sont montés sur une partie du cadre (1) aux endroits des raccordements (8) des montants (5) sur cette partie du cadre (1).

3. Elément de filtre selon l'une des revendications précédentes, caractérisé en ce que les moyens de fixation pour monter l'élément de filtre dans le corps du filtre sont constitués par au moins deux attaches (9) disposées sur une partie du cadre (1) à une certaine distance l'une de l'autre.

4. Elément de filtre selon la revendication 3, caractérisé en ce que les attaches (9) sont disposées sur la partie du cadre (1) aux endroits des raccordements (8) des montants (5) sur cette partie du cadre (1).

5. Elément de filtre selon l'une des revendications précédentes, caractérisé en ce qu'il comporte au moins une bande de maintien (10), disposée sur l'organe de filtrage (2) et s'étendant dans une direction sensiblement transversale par rapport aux montants (5), cette bande de maintien (10) divisant l'étendue de l'organe de filtrage (2) de l'élément de filtre en au moins deux secteurs (11).

6. Elément de filtre selon la revendication 5, caractérisé en ce que les étendues des deux secteurs (11) définis par la bande de maintien (10) sont sensiblement dans un rapport 1/2.
